Europäisches Patentamt

European Patent Office

Office européen des brevets

(19)

(11) Veröffentlichungsnummer : **0 134 449**
**B1**

(12) # EUROPÄISCHE PATENTSCHRIFT

(45) Veröffentlichungstag der Patentschrift :
01.02.89

(21) Anmeldenummer : 84107402.4

(22) Anmeldetag : 28.06.84

(51) Int. Cl.⁴ : **C 08 F   2/16**, C 08 F   4/28.
C 09 J   3/14, D 21 H   3/38

(54) **Verfahren zur Herstellung wässriger Polymerdispersionen und ihre Verwendung.**

(30) Priorität : 01.07.83 DE 3323804

(43) Veröffentlichungstag der Anmeldung :
20.03.85 Patentblatt 85/12

(45) Bekanntmachung des Hinweises auf die Patenterteilung : 01.02.89 Patentblatt 89/05

(84) Benannte Vertragsstaaten :
BE CH DE FR GB LI NL

(56) Entgegenhaltungen :
GB—A—   854 191
US—A—  3 769 248
Journal of Polymer Science: Polymer Symposium 72,
161-198 (1985)
Die Akte enthält technische Angaben, die nach dem
Eingang der Anmeldung eingereicht wurden und die
nicht in dieser Patentschrift enthalten sind.

(73) Patentinhaber : WACKER-CHEMIE GMBH
Prinzregentenstrasse 22
D-8000 München 22 (DE)

(72) Erfinder : Brabetz, Hartmut, Dr. Dipl.-Chem.
Ludwig-Thoma-Strasse 29
D-8263 Burghausen (DE)
Erfinder : Eck, Herbert, Dr. Dipl.-Chem.
Burg 11
D-8263 Burghausen (DE)
Erfinder : Jira, Reinhard, Dr. Dipl.-Chem.
Haydnstrasse 13
D-8263 Burghausen (DE)
Erfinder : Hopf, Heinrich
Mehringer Strasse 49a
D-8263 Burghausen (DE)

**Beschreibung**

Die Möglichkeit der Verwendung von Stärke oder Stärkederivaten als Schutzkolloid bei der Herstellung wäßriger Polymerdispersionen ist bereits mehrfach vorgeschlagen worden.

Beispielsweise wird in der EP-A-21 542 ein Verfahren zur Herstellung wäßriger Vinylacetat-Polymerdispersionen beschrieben, demzufolge das Monomer und der Initiator einer wäßrigen Lösung eines Emulgators und von Hydroxyethyl- und/oder Hydroxypropylstärke mit einem Substitutionsgrad von über 0,8 hinzugefügt wird.

Die US-A-3 632 535 beschreibt die Herstellung wäßriger Vinylacetat-Polymerdispersionen in Gegenwart bestimmter oxydierter Stärken. Von der Verwendung anderer Stärkederivate wird ausdrücklich abgeraten, da dabei Produkte mit unbefriedigenden Ligenschaften entstünden.

Da für verschiedene Anwendungen von Polymerdispersionen ein Emulgatorgehalt unerwünscht ist, bestand nun die Aufgabe darin, ein Verfahren zur Herstellung wäßriger Polymerdispersionen zu finden, bei dem auf den Zusatz von Emulgatoren bei der Polymerisation verzichtet werden kann. Außerdem sollte es möglich gemacht werden, nach dem Verfahren alle gängigen Monomeren zu polymerisieren, trotzdem aber stippen- und koagulatfreie Dispersionen zu erhalten, die die in der heutigen Praxis erforderliche Stabilität auch z. B. gegen Scherung, Temperatureinflüsse, Elektrolytzusatz besitzen. Auch sollten Dispersionen mit Festgehalten von vorzugsweise über 40 Gew.-% hergestellt werden können.

Gegenstand der Erfindung ist demnach ein Verfahren zur Herstellung wäßriger Polymerdispersionen durch Polymerisation ethylenisch ungesättigter Verbindungen mittels freier Radikale liefernder, zumindest teilweise wasserlöslicher Initiatoren bei Reaktionstemperaturen von + 10 bis + 100 °C in Gegenwart von Stärke und/oder Stärkederivaten und gegebenenfalls weiterer üblicher Zusatzstoffe unter Vorlage von höchstens einem Drittel der Monomeren und Dosierung des Restes der Monomeren während der Polymerisation, dadurch gekennzeichnet, daß als Initiatoren, gegebenenfalls in Kombination mit wasserlöslichen Reduktionsmitteln, Wasserstoffperoxid, Ketonperoxide und/oder organische Hydroperoxide in Mengen von mindestens 30 mmol je kg des gesamten Monomeren(gemisches), als Stärke wasserlösliche bzw. in Wasser quellbare maximal 30 Gew.-% Amylose enthaltende Stärke und als Stärkederivat durch Hydrolyse abgebaute Stärke in Mengen von mindestens 0,6 Gew.-%, bezogen auf Gesamtgewicht des Monomeren(gemisches), verwendet werden und daß die Polymerisation in Abwesenheit von Emulgator durchgeführt wird.

Erfindungsgemäß lassen sich insbesondere Styrol, das gegebenenfalls substituiert sein kann, (Meth-) Acrylsäureester mit verzweigten oder unverzweigten gesättigten $C_1$- bis $C_{18}$-Alkoholen, (Meth-) Acrylnitril, Diene, Vinyl- oder Allylester von aliphatischen, araliphatischen oder aromatischen $C_1$- bis $C_{19}$-Carbonsäuren und Vinylhalogenide polymerisieren.

Sie können in vielen Fällen einzeln oder, soweit es die Copolymerisationsparameter gestatten, im Gemisch, gegebenenfalls mit weiteren Monomeren, insbesondere mit Alkenen, wie Ethylen, Propylen, Isobutylen, mit Fumar- und Maleinsäure, deren Mono- und/oder Diestern mit den oben genannten Alkoholen, deren Amiden oder Nitrilen (co)polymerisiert werden.

Auch Vinylsulfonate, Monoester von Di- oder Polyhydroxylverbindungen mit (Meth-) Acrylsäure oder Crotonsäure, N-Vinyl-2-pyrrolidon, Vinylpyridin, N-Vinyllactone, Vinyl- oder Allyl(di-) acetylacetat, Vinyl- oder (Meth-) Acryloylalkoxysilane ; Vinyl- oder Allylverbindungen von Glycidylalkohol, alpha-Chloralkylcarbonsäuren und Dichlortriazinen, sowie olefinisch ungesättigte N-Methylolamide, z. B. N-Methylol(meth) acrylamid, N-Methylolallylcarbamat, N-Methylolallylether, Mannichbasen, N-Methylolester und -ether von N-Methylol(methy) acrylamid können als Comonomere eingesetzt werden.

Als bi- oder polyfunktionelle Comonomere seien beispielsweise die folgenden Verbindungen genannt :

Divinyl- und Diallylether von Glykolen, Divinyl- und Diallylester von gesättigten Dicarbonsäuren, Polyvinyl- und Polyallylester von Polycarbonsäuren, Di- und Polyester von Di- und Polyhydroxyverbindungen mit (Meth-) Acrylsäure, Vinyl- und Allylester der (Meth-) Acryl-, Croton-, Malein- und Fumarsäure und Divinylbenzol.

Die erwähnten Comonomeren können, soweit es die Copolymerisationsparameter und die gewünschten Eigenschaften der Dispersion bzw. des Copolymerisats zulassen, mit den eingangs genannten Monomeren oder deren Gemischen copolymerisiert werden.

Als Beispiele für die Monomeren, die sich erfindungsgemäß homo- oder copolymerisieren lassen, seien genannt :

Styrol, Chlorstyrol, Methylstyrol, Methyl(meth) acrylat, Ethyl(meth) acrylat, Propyl(meth) acrylat, Butyl(meth) acrylat, Ethylhexyl(meth) acrylat, Lauryl(meth) acrylat, Butadien, Isopren, Cyclobutadien, Vinylidenchlorid, Vinylformiat, Vinylacetat, Vinylpropionat, Vinylhexanoat, Vinyllaurat, Vinylstearat, die den genannten Vinylestern entsprechenden Allylester, Vinylester von in α-Stellung verzweigten Alkylcarbonsäuren, die nach der sogenannten Koch-Synthese hergestellt werden (Ester der Versatic$^{(R)}$-säuren, Shell AG), Vinylfluorid, Vinylchlorid und Vinylbromid.

Als freie Radikale liefernde, zumindest teilweise wasserlösliche Initiatoren, die vorzugsweise in Kombination mit wasserlöslichen Reduktionsmitteln als Redox-Initiatorsystem eingesetzt werden, eignen sich Wasserstoffperoxid, Ketoperoxide, insbesondere Acetylacetonperoxid, und/oder organische Hydroperoxide ; bevorzugt werden Alkyl- und/oder Aralkylhydroperoxide verwendet. Namentlich zu nennen sind : Isopropylhydroperoxid, tert.-Butylhydroperoxid, Cumolhydroperoxid, Diisopropylphenylhydroperoxid, Pinanhydroperoxid, p-Nitrocumolhydroperoxid, p-tert.-Butylphenylhydroperoxid, tert.-Amylhydroperoxid, 2,5-Dimethylhexan-2,5-dihydroperoxid.

Als bevorzugte Reduktionsmittel sind reduzierende Schwefelverbindungen, insbesondere Salze der Sulfoxylsäure und der schwefeligen Säure, sowie Ascorbinsäure zu nennen. Als einzelne Schwefelverbindungen sind Natrium- und Zinkformaldehydsulfoxylat, Natriumbisulfit und Natriumsulfit zu nennen.

Die genannten Oxydations- und Reduktionsmittel können jeweils einzeln oder als Gemische verwendet werden. Vorzugsweise wird die Oxydationskomponente gegenüber der Reduktionskomponente im Überschuß eingesetzt. Dies kann z. B. dadurch geschehen, daß das Oxydationsmittel ganz oder teilweise vorgelegt wird, während das Reduktionsmittel und gegebenenfalls der Rest der Oxydationskomponente vorzugsweise im Maße ihres Verbrauches während der Polymerisation dosiert werden.

Selbstverständlich können aber auch beide Komponenten eines Redox-Systems dosiert werden. Der peroxidische Initiator wird in Mengen von mindestens 30 mmol, vorzugsweise mindestens 45 mmol, bezogen auf 1 kg des gesamten Monomeren(gemisches), eingesetzt. Die Menge des gegebenenfalls mitverwendeten Reduktionsmittels beträgt vorzugsweise 15 bis 95 Mol-%, insbesondere bis 80 Mol.-%, bezogen auf peroxidische Verbindung(en).

Als Reaktionsgemisch werden hier das Wasser und darin gelöste oder dispergierte Reaktionskomponenten und Verbindungen bezeichnet.

Die Obergrenze der Konzentration des Initiators richtet sich nach Art der eingesetzten Monomeren und insbesondere nach der gewählten Reaktionstemperatur und dem beabsichtigten Polymerisationsgrad. Auch das Schutzkolloid hat einen gewissen Einfluß auf die zu verwendende Menge des Initiators. Der Fachmann kann die optimalen Mengen jedoch in einigen wenigen Vorversuchen ohne Schwierigkeiten ermitteln. Im allgemeinen werden 2 Gew.-%, bezogen auf die Gesamtmenge der Monomeren genügen.

Als Schutzkolloide werden einzeln oder im Gemisch miteinander wasserlösliche bzw. in Wasser quellbare Stärken, sogenannte Quellstärken, und/oder durch Hydrolyse abgebaute Stärken, insbesondere durch saure Hydrolyse abgebaute Stärken, die vielfach auch als Dextrine bezeichnet werden, eingesetzt.

Die Quellstärken sind chemisch nicht modifiziert, d. h. z. B. nicht veräthert oder verestert, sondern lediglich z. B. durch Kochen der nativen Stärken mit Wasser wasserlöslich oder in Wasser quellbar gemacht. Bei der Auswahl der nativen Stärken brauchen im allgemeinen keine besonderen Anforderungen mit einer Ausnahme, die im weiteren näher erläutert wird, beachtet zu werden. So können praktisch alle Stärken pflanzlicher Herkunft nach der oben genannten Wärmebehandlung einzeln oder als Gemisch erfindungsgemäß eingesetzt werden. Es seien als Beispiele nur Stärken aus Mais, Weizen, Kartoffeln, Tapioka, Reis, Sago und Sorghum-Hirse genannt. Es wurde allerdings festgestellt, daß amylosereiche Stärken im Gegensatz zu den amylopectin-reichen Stärken ungeeignet sind. Geeignet sind solche Stärken, die höchstens zu 30 Gew.-% aus Amylose bestehen. Als durch Hydrolyse abgebaute Stärke sind Dextrine praktisch aller Stärkequellen verwendbar, zu nennen wären hier beispielsweise die vorstehend genannten Pflanzen.

Die Herstellung der Dextrine durch saure Hydrolyse braucht hier nicht eingehender beschrieben zu werden, sie ist dem Fachmann bekannt.

Im übrigen gibt es die erfindungsgemäß einzusetzenden Stärken und Stärkederivate vielfach als Handelsprodukte auf dem Markt.

Die vorstehend beschriebenen Schutzkolloide auf der Basis der Stärke(derivate) werden erfindungsgemäß in Mengen von mindestens 0,6 Gew.-%, vorzugsweise mindestens 0,9 Gew.-%, bezogen auf das Gesamtgewicht des Monomeren(gemisches), eingesetzt. Vorzugsweise werden mindestens 0,5 Gew.-% dieser Schutzkolloide, bezogen auf Gesamtmonomer, insbesondere die für die Stabilisierung des gesamten Ansatzes erforderliche Mindestmenge an Stärke(derivat) bereits vor Polymerisationsbeginn dem Reaktionsgemisch zugesetzt. Durch die Menge des vorgelegten Schutzkolloids kann in bequemer Weise die Viskosität der fertigen Dispersion bei gegebenem Schutzkolloid und gegebener Temperatur gesteuert werden, z. B. kann durch Vorlage der Gesamtmenge der Stärke/des Dextrins die Viskosität stark erhöht oder durch Erhöhung der dosierten Menge des Schutzkolloids abgesenkt werden.

Die Obergrenze der Schutzkolloidmenge wird praktisch nicht durch das erfindungsgemäße Polymerisationsverfahren, sondern durch den Einsatzzweck der fertigen Dispersion gesetzt. Natürlich setzt auch die Viskosität der Stärke der einsetzbaren Menge Grenzen. Dies wird z. B. daraus ersichtlich, daß diese Grenze beim Einsatz von Knetern für die Polymerisation weiter hinausgeschoben werden kann.

« Hochviskose » Stärketypen, können z. B. vorzugsweise bis 3 Gew.-%, sehr « niederviskose » Typen, z. B. dünnkochende Gelbdextrintypen, hingegen z. B. vorzugsweise bis 100 Gew.-%, insbesondere bis 50 Gew.-%, bezogen auf Gesamtmonomergewicht, eingesetzt werden. « Mittelviskose » Typen können dementsprechend in Mengen von vorzugsweise 0,8 bis 50 Gew.-% verwendet werden.

Manche Stärketypen sind bekanntermaßen polymerisationshemmend. Sie werden vorzugsweise vermieden oder nur in untergeordneten Mengen eingesetzt. Es empfiehlt sich, die Eignung in einem kleinen Vorversuch zu testen.

Das erfindungsgemäße Polymerisationsverfahren wird bei 10 bis 100 °C, vorzugsweise 35 bis 80 °C, und vorzugsweise bei Drucken bis 200 bar durchgeführt. Wird kein Ethylen eingesetzt, wird die Polymerisation vorzugsweise höchstens beim autogenen Druck der Monomeren bei der jeweiligen Reaktionstemperatur durchgeführt. Beim Einsatz von Ethylen genügen in einer besonders bevorzugten Ausführungsform Drucke von bis 100 bar.

Sofern Ethylen mitpolymerisiert wird, kann es zur Gänze vorgelegt oder teilweise dosiert werden. Vorzugsweise wird ein bestimmter gewünschter Druck vor der Polymerisation eingestellt und dann gegebenenfalls durch Nachdrücken von Ethylen über die Polymerisation konstant gehalten. Natürlich kann der Ethylendruck während der Polymerisationsreaktion auch variiert werden, sofern dies z. B. zur Herstellung von Polymerisaten unterschiedlicher Zusammensetzung gewünscht wird.

Die anderen Monomeren, bzw. Comonomeren werden zu höchstens 1/3 der Gesamtmenge vorgelegt, der Rest wird während der Polymerisation, vorzugsweise im Maße des Verbrauches dosiert.

Es hat sich weiterhin als vorteilhaft erwiesen, die Gesamtmonomerenkonzentration dieser anderen Monomeren im Reaktionsgemisch unter 20 Gew.-%, weiter bevorzugt bei höchstens 15 Gew.-%, bezogen auf das Gesamtgewicht des Reaktionsgemisches, zu halten. Sofern Ethylen copolymerisiert wird, insbesondere wenn Copolymere mit mehr als 10 Gew.-% einpolymerisierter Ethyleneinheiten angestrebt sind, wird die Gesamtkonzentration dieser anderen Comonomeren, d. h. der ungesättigten Ester, halogensubstituierten Ethylene usw., besonders vorzugsweise bei höchstens 10 Gew.-%, insbesondere höchstens 5 Gew.-%, bezogen auf das Gesamtgewicht des Reaktionsgemisches gehalten. Die Monomeren können getrennt, gemischt und/oder als Voremulsion zugegeben werden.

Als weitere übliche Zusatzstoffe werden gegebenenfalls Molekulargewichtsregler, Puffersubstanzen, Schutzkolloide wie Polyvinylalkohole (teilverseiftes Polyvinylacetat), Cellulosederivate u. ä. in den üblichen Mengen eingesetzt. Allerdings werden diese Dispergierhilfsstoffe und Dispersionsstabilisatoren, sofern überhaupt, vorzugsweise erst der fertigen Dispersion nach Ende der Polymerisation zugesetzt, da sie sonst vielfach in unerwünschter Weise in die Polymerisation eingreifen oder die Produkte in unerwünschter Weise modifizieren können.

Nach Ende der Polymerisation können auch andere übliche Zusätze in die erfindungsgemäß hergestellten Dispersionen in üblichen Mengen eingebracht werden. Als Beispiele hierfür seien Filmbildungshilfsstoffe, Weichmacher, Pesticide, Emulgatoren, Stabilisatoren gegen thermische oder elektromagnetische Schädigung u. a. m. genannt.

Die erfindungsgemäß hergestellten Dispersionen können als solche z. B. zur Herstellung von Klebstoffen, wie insbesondere Papier-, Folien-, (wasserfesten) Holzleimen, als Farb-, Textil- oder Papierhilfsmittel, in der Bauindustrie, z. B. als Zusatz zu hydraulisch abbindenden Massen verwendet werden.

Die Polymerisate können aber z. B. auch ausgefällt werden oder nach einem anderen bekannten Verfahren isoliert werden.

Die folgenden Versuche sollen das erfindungsgemäße Verfahren weiter erläutern. Die Mengen und Konzentrationen beziehen sich, sofern nicht anders angegeben, auf das Gewicht. Die Prozent-Angaben der Mengen der Komponenten der Initiatorsysteme, der Monomeren und der Stärke(derivate) betiehen sich jeweils auf das Gesamtgewicht der Monomeren (ohne Ethylen), die des Festgehaltes und der Restmonomeren auf das Gesamtgewicht der Dispersionen. Der Naßrückstand ist in Gramm/1,5 kg-Ansatz angegeben. Die mittlere Teilchengröße wurde mit Nanosizer in nm gemessen und ist nach der Teilchengrößeverteilung angegeben. Die Viskositäten wurden mit einem Epprecht-Rheometer (Becher und Meßstufe angegeben), bzw.* einem Brookfield-Viskosimeter (min$^{-1}$/mPas) gemessen.

Allgemeine Vorschrift für die Beispiele 1-32 und Vergleichsversuch A-C.

In einem zylindrischen Reaktionsgefäß mit Ankerrührer, Rückflußkühler, Thermometer und Zulaufgefäßen für Initiator, Monomer(engemisch) und Pufferlösung, sowie einem Stutzen zur Entnahme von Proben wurden Wasser, Stärke, gegebenenfalls Teile des Katalysator-Systems, gegebenenfalls ein Teil der Monomeren und gegebenenfalls Zusatzstoffe vorgelegt, unter Rühren auf Reaktionstemperatur gebracht und der Rest der Monomeren, des Katalysator-Systems und Puffer in etwa 2 Stunden zudosiert. Nach Ende der Polymerisation wurde gegebenenfalls noch 1/2 Stunde in üblicher Weise unter weiterem Zusatz wasserlöslichen Initiators nachpolymerisiert.

Die Dosierung der Monomeren (abgesehen von Ethylen) wurde so eingestellt, daß

bei Fahrweise A : die Konzentration der Monomeren im Reaktionsgemisch zwischen 20 und 15 Gew.-%,

bei Fahrweise B zwischen 5 und 10 Gew.-% und

bei Fahrweise C bei knapp 5 Gew.-% gehalten wurde.

Die Einzelheiten der Beispiele sind der folgenden Tabelle zu entnehmen. Die dabei verwendeten Abkürzungen bedeuten :

v vorgelegt

AA Acrylamid

AB Acrylsäurebutylester

AMA Allylmethacrylat

AS Acrylsäure

E Ethylen

HEA Hydroxyethylacrylat

MA Methylacrylat MMA Methylmethacrylat
TBHP tert.-Butylhydroperoxid
DTBP Di-tert.-butylperoxid
DBP Dibenzoylperoxid
d dosiert
OA 2-Ethylhexylacrylat
OF Bis(2-ethylhexyl) fumarat
S Styrol
Si Vinyltrimethoxysilan
VA Vinylacetat
VC Vinylchlorid
VS Vinylsulfonat
Veo VeoVa[R]10, Vinylversatat[R]
$H_2O_2$ Wasserstoffperoxid
CHP Cumylhydroperoxid
NFS Natriumformaldehydsulfoxylat
NS Natriumsulfit
Es wurden handelsübliche Stärken und Dextrine eingesetzt :
I Gelbdextrin D 3100, dünnkochend (aus Kartoffelstärke) ; Avebe
II Dexylose D 230, Quellstärke mit hohem Amylopectingehalt ; Roquette
III relativ hochviskoses Maisdextrin ; Roquette, BCF Colle
IV niederviskoses Maisdextrin DF 2600 ; Roquette
V native Kartoffelstärke ; Roquette
VI Gelbdextrin 30AN (aus Kartoffelstärke) ; Avebe
VII Dextrin W50, Weißdextrin, dünnkochend (aus Kartoffelstärke) ; Avebe
VIII Dexylose D 215, vgl. II, aber niedrig viskoser
IX Glacelys, Quellstärke ; Roquette
X native Weizenstärke ; Roquette
XI Nylgum A55, niedrige Viskosität ; Avebe, mit Phosphorsäure abgebaute Stärke
XII Nylgum A85, mittlere Viskosität ; Avebe, mit Phosphorsäure abgebaute Stärke
XIII Nylgum A160, hohe Viskosität ; Avebe, mit Phosphorsäure abgebaute Stärke
XIV Waxylys 100, amylopectin-reiche, native Wachsmaisstärke ; Roquette
XV Eurylon, amylose-reiches Stärkeprodukt ; Roquette
RM Restmonomergehalt
FG Festgehalt
NR Naßrückstand

(Siehe Tabelle Seite 6 ff.)

Tabelle

| Nr. | Monomere (%) | Stärketype (%) | | Katalysatorsystem (%) | Fahrweise | T (°C) | pH |
|---|---|---|---|---|---|---|---|
| 1 | VA(99.3d);VS(0.5v u. 0.2d) | I | (8v) | TBHP(0.9v);NFS u. NS (je 0.3d) | B | 70 | 3.3 |
| 2 | VA(99.3d);VS(0.7d) | I | (8v) | dto. | | 70 | 4.2 |
| 3 | VA;d | II I | (0.75v) (0.25v) | dto. | C | 67 | 4.2 |
| 4 | VA(98d);AS(2d) | II | (1.5 v) | TBHP(0.9v);NFS u. NS (je 0.35d) | B | 70 | 4.1 |
| 5 | S(50);OA(40);OF(8.3)AS (0.3)AA(0.6);Si(0.5);d | I | (8v) | TBHP(0.9v);NFS u. NS (je 3d) | A | 75 | 3.5 |
| 6 | S(40);AB(60);d | I | (8v) | TBHP(0.9v);NFS u. NS (je 0.6d) | B | 70 | ~2.8 |
| 7 | AB;d | I | (4v) | $H_2O_2$ (0.2v);NFS u. NS (je 0.2d) | B | 73 | 2.6 |
| 8 | VC(30);VA(70);E(30 bar);d | I II | (2.3v) (1.4v) | TBHP(1.2v);NFS (0.4d) | B | 65 | 6.5 |
| 9 | MMA(44);AB(56);d | I | (8v) | TBHP(0.9v);NFS u. NS (je 0.35d) | C | 69 | 4.0 |
| 10 | AB(99.8);AMA(0.2);d | I | (4v) | $H_2O_2$(0.3v);NFS u. NS (je 0.3d) | C | 75 | 2.5 |
| 11 | S(40);AB(60);d | III | (8v) | TBHP(1.1v);NFS (0.4d) | C | 70 | 4.3 |
| 12 | S(40);AB(60);d | IV | (8v) | dto. | C | 75 | 2.9 |

EP 0 134 449 B1

## Tabelle (Fortsetzung)

| Nr. | Monomere (%) | Stärketype (%) | Katalysatorsystem (%) | Fahrweise | T (°C) | pH |
|-----|--------------|----------------|------------------------|-----------|--------|-----|
| 13 | VA(93.3);AS(1);HEA(5.7); d; E (50 bar); v | II (1v) I (3.8v) | TBHP(1v);NFS u. NS (je 0.35d) | B | 50 | 3.6 |
| 14 | S(50);AB(50);d | IV(2.5v) | TBHP(1.1 v);NFS u.NS (je 0.45d) | B | 78 | 3.5 |
| 15 | VA;d | VI (8v) | TBHP(0.9v);NFS u.NS(je 0.35d) | C | 70 | 4.1 |
| 16 | VA;d | VII(8v) | dto. | B | 68 | 4.1 |
| 17 | VA;d | I(1v) | dto. | A | 67 | 4.0 |
| 18 | VA;d | VIII(2.5v) | TBHP(0.9v);NFS u. NS (je 0.3d) | B | 67 | 3.6 |
| 19 | VA;d | IX(2.5v) | dto. | B | 69 | 4.0 |
| 20 | VA;d | II(2.5v) | TBHP(1.1v);NFS u. NS (je 0.35d) | B | 69 | 4.3 |
| 21 | VA;d | XIV(2.5v) | dto. | B | 70 | 4.3 |
| 22 | VA;d | V(2.5v) | dto. | B | 70 | 5.2 |
| 23 | VA;d | X(1.5v) | TBHP(1.1v);NFS u. NS (je 0.4d) | B | 71 | 4.4 |
| 24 | VA;d | XII(4v) | TBHP(0.9v);NFS u. NS (je 0.35d) | B | 68 | 4.4 |
| 25 | VA;d | XII(4v) | $H_2O_2$(0.3v);NFS u. NS (je 0.3d) | A | ~70 | 4.7 |
| 26 | VA(60)+AB(20)+Veo(5)+ MA(13)+AA(1)+AS(1); d | XII(4v) | TBHP(0.9v);NFS u. NS (je 0.3d) | B | 75 | 3.8 |

EP 0 134 449 B1

EP 0 134 449 B1

Tabelle (Fortsetzung)

| Nr. | Monomere (%) | Stärketype (%) | Katalysatorsystem (%) | Fahrweise | T (°C) | pH |
|---|---|---|---|---|---|---|
| 27 | S(50)+AB(50);d | XII(5v) | TBHP(0.9v); NFS u. NS (je 0.3d) | B | 75 | 3.8 |
| 28 | VA;d | XI(4v) | TBHP(1.1v); NFS u. NS (je 0.3d) | B | 70 | 6.4 |
| 29 | VA;d | XIII(4v) | dto. | B | 70 | 5.6 |
| 30 | S(50);BA(50);d | XI(4v) | dto. | B | 79 | 3 – 6 |
| A | VA;d | XV (2.3v) | TBHP(1.1v);NFS u. NS (je 0.3d) | B | 72 | 4.1 |
| B | VA;d | I(8v) | DBP(0.5v) | B | 60 | 4.5 |
| C | VA;d | I(1v) | DTBP(1.3v); NFS u. NS (je 0.5d) | B | 70 | ~5 |
| 31 | VA;d | I(8v) | TBHP (0.9d); NFS (0.45d) | B | 70 | 2.4 |
| 32 | VA;d | I(8v) | TBHP (0.9d); NS (0.5d) | B | 70 | 4.1 |

## Tabelle (Fortsetzung)

| Nr. | FG (%) | R.M. (%) | N.R. (g) | Aufstrich | Teilgr. Vtlg/ (nm) | Viskosität (mPas) Cl | (mPas) CII | (mPas) CIII |
|---|---|---|---|---|---|---|---|---|
| 1 | 55.7 | 0.3 | – | sehr klar | 0/345 | 105 | 66 | – |
| 2 | 53.2 | 0.4 | – | sehr klar | 3/350 | 58 | 44 | 39 |
| 3 | 51.5 | 0.2 | 3.2 | klar | 4/600 | 2744 | 1232 | 584 |
| 4 | 53.3 | – | – | klar | – | – | – | – |
| 5 | 55.0 | 0.4 | 5.0 | klar | 2/350 | 35 | 26 | 25 |
| 6 | 48.9 | 0.7 | 5.0 | klar | 3/250 | 106 | 65 | 47 |
| 7 | 51.0 | 0.2 | 6.0 | sehr klar | 2/240 | 312 | 174 | 107 |
| 8 | 50.9 | 0 | 1.0 | | 7/1300 | 203 | 126 | – |
| 9 | 52.2 | 0.2 | 5.0 | sehr klar | 1/235 | 65 | 38 | 31 |
| 10 | 52.4 | 0,1 | 5.3 | klar | 4/270 | 312 | 183 | 119 |
| 11 | 48.9 | 0.9 | – | sehr klar | 6/2370 | 28560 | 11856 | 7519 |
| 12 | 53.7 | 0.3 | – | sehr klar | 2/291 | 3567 | 1760 | 922 |
| 13 | 48.6 | 0 | 15.0 | sehr klar | 4/710 | – | 2881 | 1694 |
| 14 | 50.8 | 3.9 | Spur | klar | 5/2780 | 7134 | 3476 | 2274 |
| 15 | 55.2 | 0.2 | – | sehr klar | 0/390 | – | – | – |
| 16 | 54.8 | 0.2 | – | klar | 1/350 | 1010 | 445 | 320 |
| 17 | 48.1 | 0.4 | – | klar | 3/545 | – | – | 85 |
| 18 | 46.9 | 0.8 | – | klar | 5/550 | 4528 | 2112 | 1000 |
| 19 | 47.2 | 0.7 | – | klar | – | – | – | – |
| 20 | 51.7 | 0.3 | – | sehr klar | 5/485 | 7546 | 3322 | 1598 |
| 21 | 51.5 | 0.3 | – | sehr klar | 4/470 | 3704 | 1628 | 728 |
| 22 | 52.2 | 0.1 | – | sehr klar | 2/349 | 4596 | 2068 | 993 |
| 23 | 52.2 | 0.1 | – | sehr klar | 0/400 | 40 | 39 | 37 |

EP 0 134 449 B1

Tabelle (Fortsetzung)

| Nr. | FG (%) | R.M. (%) | N.R. (g) | Aufstrich | Teilgr. Vtlg/ (nm) | Viskosität (mPas) | (mPas) | (mPas) |
|---|---|---|---|---|---|---|---|---|
| 24. | 53.0 | 0.1 | – | sehr klar | 1/630 | *2/ 31 000 | *10/ 8960 | *20/ 5380 |
| 25 | 46.3 | 4 | – | sehr klar | 6/1300 | – | – | – |
| 26 | 49.8 | 0.9 | – | klar | 5/1900 | BI 1130 | BII 610 | – |
| 27 | 51.5 | 0.3 | – | klar | 5/3500 | DI 31400 | DII 18700 | DIII 12630 |
| 28 | 52.6 | 1.2 | – | klar | 0/394 | *2/ 2881 | *10/ 1276 | *20/ 648 |
| 29 | 52.3 | 0.9 | – | klar | 4/400 | *2/ 3842 | *10/ 1782 | *20/ 894 |
| 30 | 52.5 | 0.7 | 2.2 | klar | 6/1270 | *2/ 4047 | *10/ 1980 | *20/ 1690 |
| A | 51.7 | 0.1 | 31 | stark stippig | 7/580 | – | CII 47 | CIII 52 |
| B | Nach 1/2 h abgebrochen, da typische Suspensionspolymerisation | | | | | | | |
| C | kaum Polymerisation; Ausbildung von 2 Schichten | | | | | | | |
| 31 | 53.6 | 0.06 | – | sehr klar | 0/305 | $AI_{49}$ | $AII_{32}$ | $AIII_{29}$ |
| 32 | 51.4 | 2.1 | – | sehr klar | 0/275 | – | $AII_{15}$ | $AIII_{15}$ |

## Patentansprüche

1. Verfahren zur Herstellung wäßriger Polymerdispersionen durch Polymerisation ethylenisch ungesättigter Verbindungen mittels freie Radikale liefernder, zumindest teilweise wasserlöslicher Initiatoren bei Reaktionstemperaturen von + 10 bis + 100 °C in Gegenwart von Stärke und/oder Stärkederivaten und gegebenenfalls weiterer üblicher Zusatzstoffe unter Vorlage von höchstens einem Drittel der Monomeren und Dosierung des Restes der Monomeren während der Polymerisation, dadurch gekennzeichnet, daß als Initiatoren, gegebenenfalls in Kombination mit wasserlöslichen Reduktionsmitteln, Wasserstoffperoxid, Ketonperoxide und/oder organische Hydroperoxide in Mengen von mindestens 30 mmol je kg des gesamten Monomeren (gemisches), als Stärke wasserlösliche bzw. in Wasser quellbare höchstens 30 Gew.-% Amylose enthaltende Stärke und als Stärkederivat durch Hydrolyse abgebaute Stärke in Mengen von mindestens 0,6 Gew.-%, bezogen auf das Gesamtgewicht der Monomeren, verwendet werden und daß die Polymerisation in Abwesenheit von Emulgator durchgeführt wird.

2. Verfahren nach Anspruch 1, dadurch gekennzeichnet, daß die peroxidischen Initiatoren in Kombination mit reduzierenden Schwefelverbindungen oder Ascorbinsäure eingesetzt werden.

3. Verfahren nach Anspruch 1 oder 2, dadurch gekennzeichnet, daß als peroxidische Initiatoren Alkyl- und/oder Aralkylhydroperoxide verwendet werden.

4. Verfahren nach einem der Ansprüche 1-3, dadurch gekennzeichnet, daß die peroxidischen Initiatoren vorgelegt werden und die Polymerisation durch die Zugabe des Reduktionsmittels gesteuert wird.

5. Verfahren nach einem der Ansprüche 1-4, dadurch gekennzeichnet, daß die Stärke (derivate) in einer Menge von mindestens 0,5 Gew.-%, bezogen auf das Monomer (engemisch) vor Polymerisationsbeginn dem Reaktionsgemisch zugesetzt wird (werden).

6. Verwendung der Dispersionen, hergestellt nach einem der vorangehanden Ansprüche, zur Herstellung von Klebstoffen, als Farb-, Textil- oder Papierhilfsmittel oder in hydraulisch abbindenden Massen.

## Claims

1. Process for the preparation of aqueous polymer dispersions by polymerization of ethylenically unsaturated compounds by means of initiators which supply free radicals and are at least partly water-soluble, at reaction temperatures of + 10 to + 100 ºC in the presence of starch and/or starch derivatives and if appropriate further customary additives, taking not more than one third of the monomers and metering in the remainder of the monomers during the polymerization, characterized in that hydrogen peroxide, ketone peroxides and/or organic hydroperoxides are used as the initiators, if appropriate in combination with water-soluble reducing agents, in amounts of at least 30 mmol per kg of the total monomer (mixture), water-soluble or water-swellable starch containing not more than 30 % by weight of amylose is used as the starch and starch degraded by hydrolysis is used as the starch derivative, in amounts of at least 0.6 % by weight, based on the total weight of the monomer (mixture), and in that the polymerization is carried out in the absence of an emulsifier.

2. Process according to Claim 1, characterized in that the peroxidic initiators are used in combination with reducing sulphur compounds or ascorbic acid.

3. Process according to Claim 1 or 2, characterized in that alkyl and/or aralkyl hydroperoxides are used as the peroxidic initiators.

4. Process according to any one of Claims 1-3, characterized in that the peroxidic initiators are taken and the polymerization is controlled by the addition of the reducing agent.

5. Process according to any one of Claims 1-4, characterized in that the starch (derivatives) is (are) added to the reaction mixture in an amount of at least 0.5 % by weight, based on the monomer (mixture), before the start of the polymerization.

6. Use of the dispersions, prepared according to one of the preceding claims, for the preparation of adhesives, as a colour, textile or paper auxiliary or in hydraulically setting compositions.

**Revendications**

1. Procédé pour préparer des dispersions aqueuses de polymères par polymérisation de composés à insaturation éthylénique à l'aide d'amorceurs, au moins partiellement hydrosolubles, fournissant des radicaux libres, à des températures de réaction allant de + 10 à + 100 ºC, en présence d'amidon et/ou de dérivés de l'amidon et éventuellement d'autres additifs usuels, en plaçant au préalable un tiers au maximum des monomères et en introduisant de façon dosée le reste des monomères pendant la polymérisation, procédé caractérisé en ce qu'on utilise comme amorceurs, éventuellement en combinaison avec des réducteurs hydrosolubles, le peroxyde d'hydrogène, des peroxydes de cétone et/ou des hydroperoxydes organiques, en des quantités d'au moins 30 mmoles/kg (du mélange) des monomères totaux, on utilise comme amidons des amidons hydrosolubles ou gonflables dans l'eau et contenant au maximum 30 % en poids d'amylose et l'on utilise, comme dérivés de l'amidon, des amidons et fécules dégradés par hydrolyse, que l'on emploie en des quantités d'au moins 0,6 % en poids, sur la base du poids total des monomères, et en ce qu'on conduit la polymérisation en l'absence d'un émulsifiant.

2. Procédé selon la revendication 1, caractérisé en ce qu'on utilise les amorceurs peroxydiques en combinaison avec des composés soufrés réducteurs ou avec l'acide ascorbique.

3. Procédé selon la revendication 1 ou 2, caractérisé en ce qu'on utilise, comme amorceurs peroxydiques, des hydroperoxydes d'alkyle et/ou d'aralkyle.

4. Procédé selon l'une des revendications 1 à 3, caractérisé en ce qu'on place au préalable les amorceurs peroxydiques et l'on règle la polymérisation grâce à l'addition du réducteur.

5. Procédé selon l'une des revendications 1 à 4, caractérisé en ce qu'on ajoute au mélange réactionnel, avant le début de la polymérisation, l'amidon ou les dérivés d'amidon en une quantité représentant au moins 0,5 % en poids, sur la base (du mélange) des monomères.

6. Utilisation des dispersions, préparées selon l'une des revendications précédentes, pour préparer des adhésifs ou colles, comme adjuvants pour colorants, peintures ou teintures, comme adjuvants pour textiles ou pour papiers, ou dans des compositions à prise hydraulique.